(19) **Europäisches Patentamt**

**European Patent Office**

**Office européen des brevets**

(11) **EP 1 442 781 A1**

(12) **EUROPEAN PATENT APPLICATION**

(43) Date of publication:
04.08.2004 Bulletin 2004/32

(51) Int Cl.7: **B01D 53/86**

(21) Application number: **03075318.0**

(22) Date of filing: **31.01.2003**

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO**<br><br>(71) Applicants:<br>• **Jacobs Nederland B.V.**<br>  **2332 CB Leiden (NL)**<br>• **GASTEC N.V.**<br>  **NL-7327 AC Apeldoorn (NL)** | (72) Inventor: **The designation of the inventor has not yet been filed**<br><br>(74) Representative:<br>**Prins, Adrianus Willem, Mr. Ir. et al**<br>**Vereenigde,**<br>**Nieuwe Parklaan 97**<br>**2587 BN Den Haag (NL)** |

(54) **Process for the removal of SO2 in a gas stream**

(57) The present invention relates to a process for the reducing the amount of $SO_2$ in a $SO_2$ and CO containing gas stream, wherein the gas stream is contacted with a Claus catalyst; a hydrogenation catalyst, and a hydrolysing catalyst. In a process according to the invention the contacting with the hydrolysing catalyst is carried out at a temperature below 270 °C.

**Description**

The invention relates to a process for the reduction of $SO_2$ in a $SO_2$ containing gas stream, such as product gas from a Claus reactor stage.

The necessity of purifying gases, which are further treated in chemical processes, or supplied to buyers, or discharged to the atmosphere, from sulphur compounds, in particular hydrogen sulphide, is generally known. Accordingly, there exist a number of processes, which are directed towards the removal of hydrogen sulphide from gas.

The best known and most suitable process for removing sulphur from gas by recovering sulphur from hydrogen sulphide is the Claus process. In this process hydrogen sulphide is converted by oxidation to a considerable extent into elemental sulphur; the sulphur thus obtained is separated from the gas by condensation. The residual gas stream (the Claus tail gas) still contains some $H_2S$ and $SO_2$.

The method of recovering sulphur from sulphur containing gases by the Claus process is based on the following overall reactions:

$$2\ H_2S + 3\ O_2 \rightarrow 2\ H_2O + 2\ SO_2 \tag{1}$$

$$4\ H_2S + 2\ SO_2 \leftrightarrow 4\ H_2O + 6/n\ S_n \tag{2}$$

Reactions (1) and (2) result in the main reaction:

$$2\ H_2S + O_2 \leftrightarrow 2\ H_2O + 2/n\ S_n \tag{3}$$

A conventional Claus converter - suitable for processing gases having an $H_2S$ content of between 50 and 100 % - comprises a burner with a combustion chamber and a condenser, the thermal stage, followed by a number of reactor stages, generally two or three. These reactor stages constitute the so-called catalytic stages and usually consist each of a reheater, a reactor filled with catalyst and a sulphur condenser.

In the thermal stage, the incoming gas stream, which is rich in $H_2S$, is combusted with an amount of air, at a temperature of approximately 1200°C. This amount of air is adjusted so that one third of the $H_2S$ is fully combusted to form $SO_2$ in accordance with the following reaction:

$$2\ H_2S + 3\ O_2 \rightarrow 2\ H_2O + 2\ SO_2 \tag{1}$$

After this oxidation of part of the $H_2S$, the non-oxidised part of the $H_2S$ (*i.e.* basically two-thirds of the amount offered) and the $SO_2$ formed react further to a considerable part, in accordance with the Claus reaction

$$4\ H_2S + 2\ SO_2 \leftrightarrow 4\ H_2O + 3\ S_2 \tag{$2^a$}$$

The gases coming from the combustion chamber are cooled to about 160°C in a sulphur condenser, in which the sulphur formed is condensed, which subsequently flows into a sulphur pit through a sulphur seal.

Thus, in the thermal stage, approximately 70 % of the $H_2S$ is converted into elemental sulphur.

The non-condensed gases, in which the molar ratio of $H_2S : SO_2$ is unchanged and still 2 : 1, are subsequently heated to about 250°C, and passed through a first catalytic reactor in which the equilibrium

$$4\ H_2S + 2\ SO_2 \leftrightarrow 4\ H_2O + 6/n\ S_n \tag{2}$$

is established.

The gases coming from this catalytic reactor are subsequently cooled again in a sulphur condenser, in which the liquid sulphur formed is recovered and the remaining gases, after being re-heated, are passed to a second catalytic reactor.

In the Claus process, $H_2S$ is not quantitatively converted to elemental sulphur, mainly due to the fact that the Claus reaction is an equilibrium reaction and therefore the conversion of $H_2S$ and $SO_2$ to elemental sulphur is not

complete:

$$2\,H_2S + SO_2 \leftrightarrow 2\,H_2O + 3/n\,S_n \qquad (2^b)$$

A residual amount of $H_2S$ and $SO_2$ remains. Now, generally it is not allowed to discharge residual gas containing $H_2S$ to the atmosphere, and so the gas is oxidised, with the hydrogen sulphide and other sulphur compounds as well as the elemental sulphur present in the gaseous phase being oxidised to sulphur dioxide. With the environmental requirements becoming stricter, this will not be allowed anymore because the sulphur dioxide emission involved is too high. It is therefore necessary to further treat the residual gas of the Claus installation, the so-called tail gas, in a so-called tail gas treater.

Tail gas processes are known to those skilled in the art. The most well-known tail gas processes are the SCOT™ process, the BSR Selectox™ process, the Claus sub-dewpoint processes such as Sulfreen™, CBA™ and MCRC™, and the SUPERCLAUS® process.

The SCOT™ process is an effective process for the treatment of tail gas (See GB-A-1 356 289). In this process the tail gas, together with reduction gas such as hydrogen and/or CO, is passed over a cobalt oxide/molybdenum oxide catalyst on an $Al_2O_3$ carrier, all sulphur components present thus being catalytically reduced to $H_2S$. The total amount of $H_2S$ is then separated from the Claus tail gas in a conventional way by absorption in a suitable liquid. The $H_2S$ is recovered from the liquid absorbent and recycled to the Claus thermal stage. One drawback of the SCOT™ process is that it requires an expensive and complicated installation. Another drawback is the high energy consumption involved in removing the hydrogen sulphide from the absorbent again. Moreover some carbonyl sulphide may be formed when CO is used as a reduction gas, especially if the SCOT™ process is carried out at a relatively low temperature. Carbonyl sulphide may be decomposed by passing the gas over an alumina bed at elevated temperatures, typically at a temperature of more than 280 °C.

In the SCOT™ process a hydrogenation catalyst is used which is based on a carrier material, usually $\gamma$-$Al_2O_3$ with a high specific catalytic surface area of typically more than 300 $m^2$/g, the carrier material being provided with active compounds such as molybdenum, cobalt and/or nickel for the hydrogenation function. In the SCOT™ hydrogenation reactor all sulphur components are converted to $H_2S$ according to

$$SO_2 + 3\,H_2 \rightarrow H_2S + 2\,H_2O \qquad (4)$$

$$1/n\,S_n\,(vapour) + H_2 \rightarrow H_2S \qquad (5)$$

$$COS + H_2O \rightarrow H_2S + CO_2 \qquad (6)$$

$$CS_2 + 2\,H_2O \rightarrow 2\,H_2S + CO_2 \qquad (7)$$

In this process it is essential that all sulphur species are converted to $H_2S$ down to the ppmv level over the hydrogenation catalyst, in order to prevent corrosion and plugging with solid sulphur in downstream equipment. For instance, partial catalytic hydrogenation of $SO_2$ to sulphur vapour or a mixture of sulphur vapour and $H_2S$ is not allowed for the SCOT™ process. In order to achieve complete hydrogenation to hydrogen sulphide and complete hydrolysis of COS (carbonyl sulphide) and $CS_2$, high catalyst bed temperatures of more than 175 °C, preferably in the range of 280-330°C are required. A process of this kind, using complete conversion of the sulphur species to hydrogen sulphide is described in GB-A-1 480 228, wherein use is made of a reduction gas.

An alternative way to remove hydrogen sulphide from tail gas is partial oxidation to elemental sulphur, as in the so-called BSR Selectox™ process, described in US-A-4 311 683. According to this process, the Claus tail gas is hydrogenated, water is removed and the $H_2S$ containing gas, mixed with oxygen, is passed over a catalyst containing vanadium oxides and vanadium sulphides on a non-alkaline, porous, refractory oxidic carrier. This process also makes use of a reduction gas.

An important drawback of both the SCOT™ process and the BSR Selectox process is that in both cases the tail gas, after hydrogenation of the sulphur components to $H_2S$, must first be cooled in order to remove the water for the greater part. Water greatly interferes with the absorption or the oxidation of $H_2S$. Due to the high investments involved, the costs of tail gas treatment according to these known methods are high.

In the SUPERCLAUS® process the Claus tail gas is subjected to further treatment, whereby $H_2S$ present in the tail gas is selectively oxidised to elemental sulphur in a dry bed oxidation stage.

In US-A-4 988 494, one of the basic patents for the SUPERCLAUS® process, it is described that the $H_2S$ concentration in the gas leaving the last catalytic Claus stage is increased to a value ranging between 0.8 and 3 % by volume by reducing the quantity of combustion or oxidation air passed to the Claus thermal stage.

The increase of the $H_2S$ concentration in the Claus tail gas, will result in a decreased $SO_2$ concentration in said tail gas, however, not to very low levels. For an $H_2S$ concentration of 0.8 % by volume, the $SO_2$ concentration will be typically 0.05-0.1 % by volume $SO_2$ and the recovery loss will typically be 0.15 — 0.3 % by volume, for a Claus process with two catalytic Claus stages. Higher $H_2S$ concentrations than 1.2 vol % tend to result in increased $SO_2$ formation in a following dry bed oxidation reactor, such as in a SUPERCLAUS® process. Therefore an $SO_2$ reducing process should be selective in that the conversion of elemental sulphur to $H_2S$ should be limited. Reduction of recovery efficiency losses due to $SO_2$ in the Claus tail gas can be achieved by passing less oxygen to the Claus thermal stage. This, however, also generates higher $H_2S$ concentrations in the tail gas, resulting in increased $SO_2$ formation in a subsequent dry bed oxidation reactor, such as in a SUPERCLAUS® system. The decrease of the $SO_2$ content in the feed gas to a dry bed oxidation reactor (such as a SUPERCLAUS® reactor) would result in an increase of the overall sulphur recovery efficiency, as $SO_2$ is not converted to sulphur vapour in this oxidation reactor.

In EP-A-0 669 854 a process for sulphur recovery is described which makes use of selective hydrogenation of $SO_2$ to elemental sulphur. This publication suggests the use of a cobalt-molybdenum catalyst on a $\gamma$-alumina support, as is used in the SCOT™ process. A disadvantage of this process is that the ratio of $H_2$ to $SO_2$ should be lower than 4 in order to reduce $SO_2$ to sulphur mainly, with a minimal $H_2S$ formation. Moreover the reducing gas should contain only minor quantities of CO, more in particular less than 20 % of the $H_2$ in the reducing gas.

During the Fourth Sulfur Technology Conference, November 5-6, 1998, Houston, TX, USA, a paper has been presented, "PROClaus Process: An Evolutionary Enhancement to Claus Performance". In this paper the selective hydrogenation of $SO_2$ in gas from a Claus reactor stage (Claus gas) to elemental sulphur is described, using a catalyst in the last catalytic Claus reactor which is basically a Claus catalyst with additional hydrogenating properties. This hydrogenation stage is followed by selective oxidation of $H_2S$ to elemental sulphur.

In order to perform selective hydrogenation of $SO_2$ to sulphur vapour instead of to hydrogen sulphide, the temperature of the gas should be reduced significantly and the ratio of hydrogen to sulphur dioxide should be low. However, the data in the paper show that the reduced temperature needed for a sufficiently selective conversion to sulphur, results in a decrease of overall $SO_2$ conversion.

The process of selective reduction to elemental sulphur is thus rather restricted in process conditions and requirements, with the consequence, that difficult and costly measures are required to meet the criteria for the selective reduction to elemental sulphur. One example thereof is the necessary reduction of the $H_2$-content of the gas mixture. A further disadvantage of the proposed process resides therein, that the temperature needs to be high, because of the required conversion of $SO_2$. High temperatures promote the reaction of elemental sulphur vapour with hydrogen, resulting in decreased yields to sulphur. As a result the product gas of this PROClaus process is still relatively rich in $H_2S$ and $SO_2$.

Accordingly, this process of selective hydrogenation of $SO_2$ to elemental sulphur is not a viable alternative for providing an increase in sulphur recovery efficiency (SRE).

In an effort to meet the continuously increasing requirements for SRE, the EUROCLAUS® process has been developed in which process a conventional Claus reactor (wherein $H_2S$ and $SO_2$ are converted to S), a Claus reduction reactor (wherein $SO_2$ is catalytically reduced) and a selective oxidation reactor (wherein $H_2S$ is selectively oxidised to S) are employed. This process is *inter alia* described in WO-A-01/23075 and WO-A-00/10693.

In WO-A-01/23075 it was recognised that - even though the considerations expressed while discussing the PROClaus process direct the skilled person away from using a hydrogenation step in relation to treatment of Claus gas - the hydrogenation of sulphur dioxide might provide a new way to improve the sulphur recovery from Claus gases.

An important aspect in the EUROCLAUS® process is the fact that Claus gas contains a considerable amount of water vapour, which amount may be within the range of 10-40% by volume. The water vapour strongly promotes the reverse Claus reaction.

$$3/n\, S_n + 2\, H_2O \leftrightarrow 2\, H_2S + SO_2 \qquad (2^c)$$

The effectiveness with respect to the removal of $SO_2$ by selective conversion to elemental sulphur can in general be adversely affected by the occurrence of reaction $2^c$.

The sulphur formed by $SO_2$ reduction, reacts back with the water vapour to form hydrogen sulphide and sulphur dioxide.

The substantial removal of water vapour has evident technical disadvantages, such as the necessity of an additional cooling/heating stage, an additional sulphur removal stage or a hydrogenation stage followed by a water-removing quench stage.

The occurrence of the side reaction mentioned above is partly determined by practical conditions, such as temperature, contact time, water vapour content, sulphur vapour content and catalytic activity, and has the effect that the sulphur yield is decreased.

Nonetheless, a disadvantage of the EUROCLAUS® process as described above, remains the formation of COS when a normal hydrogenation catalyst is used, in particular when the gas stream has relatively high CO content, such as Claus gas originating from acid gas containing elevated levels of $CO_2$ and/or hydrocarbons. COS is for example formed by reaction of S, $H_2S$ and/or $SO_2$ with CO. Due to the formation of COS, which is difficult to react further to S, it is more difficult to obtain the required removal of sulphur compounds from the gas stream. Recovery losses due to COS formation is particularly a problem in gas streams which comprise a relatively high content of CO (typically more than 0.5 %). Typically when such a gas is treated by a EUROCLAUS® process the COS levels will be in the range of 100-800 ppmv.

A process for the removal of COS is known from EP-A 0 324 526. This process requires the complete removal of $SO_2$ from a gas, before it is treated with $TiO_2$ at a temperature of at least 275 °C, during which treatment COS is hydrolysed.

A process for hydrogenating sulphur compounds followed by hydrolysis of COS is known from WO-A-98/07502. Herein a process is described wherein essentially all elemental sulphur is converted to $H_2S$ in a hydrogenation step. According to the Example, the process is carried out at a relatively low space velocity of 1,500 $h^{-1}$.

It is an object of the present invention to provide an economically attractive alternative to known $SO_2$ reduction processes, which provides a high conversion of $SO_2$ whilst maintaining a low level of COS and a relatively low level of $H_2S$.

It has now been found that $SO_2$ can be reduced very efficiently in a process wherein a gas stream is first contacted with a Claus catalyst (wherein usually only a part of the $SO_2$ is reduced by $H_2S$) and thereafter the gas stream is contacted with a combination of two specific types of catalysts.

Accordingly the present invention relates to a process for reducing the amount of $SO_2$ in an $SO_2$ and CO-containing gas stream wherein

- the gas stream is contacted with a Claus catalyst;
- the gas stream simultaneously with or subsequently to the contacting with the Claus catalyst is contacted with a hydrogenation catalyst, preferably at a temperature below 270 °C;
- the gas stream simultaneously with or subsequently to the contacting with the hydrogenation catalyst is contacted with a hydrolysing catalyst - preferably a titanium oxide containing catalyst ($TiO_2$ catalyst) — at a temperature below 270 °C; and
- wherein the $H_2S$ formation by the hydrogenation catalyst and the hydrolysing catalyst is non-excessive compared to the $SO_2$ reduction by the hydrogenation catalyst and the hydrolysing catalyst.

In practice, $H_2S$ formation by the hydrogenation catalyst and the hydrolysing catalyst is considered to be non-excessive if the increase in $H_2S$ concentration (in ppmv) effected by the hydrogenation catalyst and the hydrolysing catalyst is less than 15 times the decrease in $SO_2$ concentration (in ppmv) effected by the hydrogenation catalyst and the hydrolysing catalyst, more in particular if said increase in $H_2S$ concentration is less than 7 times said decrease in $SO_2$ concentration. In a process wherein the contacting of the gas stream with the Claus catalyst takes place before contacting the hydrogenation catalyst, this effect may be determined by comparing $SO_2$ and $H_2S$ concentrations immediately after contacting with the Claus catalyst with the concentrations thereof immediately after contacting with the hydrogenation catalyst and the hydrolysing catalyst. In general, this effect may be determined by comparing a process of the invention with a corresponding process wherein the stream is contacted with a Claus catalyst but not with the hydrogenation catalyst and the hydrolysing catalyst.

The elemental sulphur can be recovered from the gas stream by any means, *e.g.* as known in the art.

A hydrolysing catalyst as used herein is defined as a catalyst capable of hydrolysing COS at a temperature below 270 °C. The hydrolysing catalyst and/or the hydrogenation catalyst are preferably CO-shifting catalysts, *i.e.* catalysts which are capable of forming atomic hydrogen out of CO and water. It has been found that such a catalyst very effectively contributes to the hydrogenation of $SO_2$, and thus to reducing the amount thereof in the process stream.

The hydrogenating function and the hydrolysing function may be combined in one catalyst, *e.g.* a hydrogenation catalyst supported on a suitable hydrolysing catalyst such as $TiO_2$.

It is surprising that such a process is capable of reducing $SO_2$ while suppressing COS formation in the gas stream, compared to a EUROCLAUS® process, since $TiO_2$ is known to be a good Claus catalyst and the skilled professional would expect that in the gas stream — having an $SO_2$ content below the Claus equilibrium once it is contacted with a catalyst active in hydrolysis such as a $TiO_2$ catalyst — $SO_2$ would be formed by the reverse Claus reaction.

Thus, in one aspect the invention relates to the use of a hydrogenation catalyst in combination with a hydrolysing catalyst to reduce the amount of COS in a gas stream, such as COS formed in a process to reduce the amount of $SO_2$ in a gas stream.

It is also surprising that it is possible to effectively carry out the entire process, or at least the contacting with the hydrolysing catalyst such as a $TiO_2$ catalyst and hydrogenation catalyst at a relatively low temperature, namely below 270 °C - *e.g.* in the range of 220-230 °C - while effectively suppressing the reduction of elemental sulphur to $H_2S$. After all, according to known processes wherein COS reacts with water to form carbon dioxide and hydrogen sulphide in the presence of a hydrolysing catalyst such as a $TiO_2$ catalyst, the temperature should be higher, preferably at least 300 °C. The presence of $SO_2$ leads the skilled person away from using a temperature below 300 °C, since at lower temperatures $SO_2$ is known to have a deactivating effect on hydrolysing catalysts, in particular with $TiO_2$ containing catalysts to form a catalytically inactive surface sulphate.

It is also surprising that the process can be carried out at a relatively high space velocity, in comparison to said known high temperature processes, wherein a space velocity of typically about 1 200 $Nm^3$ gas/$m^3$ hydrolysing catalyst per hour is used. The space velocity in a process according to the present invention may be considerably higher, *e.g.* about 5 000 $Nm^3$ gas/$m^3$ hydrolysing catalyst per hour or more.

It has further been noted that in a process according to the present invention $SO_2$ can be converted together with COS, while elemental S, present in the gas stream, does not react to $H_2S$ to a substantial degree. It is thought that this conversion may take place according to the following reaction

$$2 \; COS + SO_2 \rightarrow 2 \; CO_2 + 3/n \; S_n \qquad (8)$$

A process according to the present invention has been found to be capable of reducing $SO_2$ such that the total $SO_2$ conversion is at least 90 %, preferably at least 95 %, more preferably at least 98 %. The $SO_2$ conversion as used in the present descriptions and claims is calculated as: 100 % x (vol % $SO_2$ at reactor inlet — vol % $SO_2$ in product-gas)/( vol % $SO_2$ at reactor inlet).

In terms of $SO_2$ concentrations, the amount of $SO_2$ is preferably reduced to less than 500 ppmv, more preferably less than 400 ppmv, even more preferably to a level in the range of 20-200 ppmv.

It has been found possible to realise such conversion in a gas stream with a relatively high level of CO, without excessive formation of COS.

After being treated with the hydrolysing catalyst, the gas stream typically contains up to 1.5 vol % $H_2S$. Preferably the amount of $H_2S$ is in the range of 0.5-1.3 vol %. Very good results have been achieved with a process wherein the gas stream contains 0.6- 1.2 vol % $H_2S$.

After treatment with the hydrolysing catalyst, the gas stream usually contains elemental sulphur (including molecules consisting of sulphur atoms for instance $S_6$ and $S_8$), typically in a concentration of 0.1 vol % (calculated as $S_1$ vapour) or more. Preferably, the amount of elemental sulphur is 0.5-7 vol %, more preferably 1-4 vol. %.

The COS production during hydrogenation and hydrolysis is typically less than the $SO_2$ reduction by the hydrogenation catalyst. The COS level in the gas stream after contacting with the hydrogenation catalyst and with the hydrolysing catalyst is preferably less than 600 ppmv, more preferably less than 400 ppmv, even more preferably 100 ppmv or less. Although it is encompassed within a process according to the invention, it is in practice not necessary to reduce the amount of COS to less than 10 ppmv, more in particular it is normally not necessary to reduce the amount of COS to less than 25 ppmv.

A gas stream treated according to the invention can in principle be any gas stream containing $SO_2$. In addition to $SO_2$, the gas stream in practice typically also contains water, $CO_2$, $H_2S$ and often some COS and/or elemental sulphur before being treated according to the invention.

The process is in particularly suitable to treat a product gas from a first or subsequent Claus reactor. Such a product gas usually contains about 2 000-10 000 ppmv $SO_2$, about 4 000-20 000 ppmv $H_2S$, about 0.2-10 vol. % CO. Other typical components that may be present include hydrogen (usually in a concentration of 0.5-4 vol.%), water (*e. g.* 10-40 vol. %), $CO_2$ (*e.g.* 0.5-30 vol%), COS, $CS_2$ and nitrogen (usually the major component ).

The expression "ppmv", as used herein, relates to parts per million on a volumetric basis.

Very good results have been achieved with a Claus process wherein the gas stream is a Claus product gas from a first catalytic Claus stage to which essentially no extra reducing agent, in particular no hydrogen and no CO have been added.

The operating conditions can be chosen in a wide range, suitable for Claus processes, *e.g.* a temperature in the range of 150-350 °C, preferably in the range of 190-250 °C, with the proviso that the contacting with hydrogenation catalyst and hydrolysing catalyst takes place below 270 °C.

The lower temperature limit is not particularly critical, as long as the operating temperature is above the sulphur vapour dew point of the process gas. Preferably the operating temperature is at least 10 °C above the sulphur vapour dew point.

Very good results have been achieved with a process wherein at least the contacting with the hydrogenation catalyst and the hydrolysing catalyst, in particular a $TiO_2$ catalyst, takes place at a temperature in the range of 190-260 °C, preferably in the range of 210°C-240 °C. For obtaining a very low concentration of $SO_2$ in combination with a relatively low formation of COS, a temperature of 220-230 °C has been found highly satisfactory.

A process according to the invention has been particular effective with respect to $SO_2$ reduction and low COS formation at a space velocity (based upon the bed volume of hydrolysing catalyst) of at least 500 $Nm^3$ gas/$m^3$ $hr^{-1}$, preferably of at least 1 000 $Nm^3$ gas/$m^3$ $hr^{-1}$, more preferably at least 1 650 $Nm^3$ gas/$m^3$ $hr^{-1}$, even more preferably at least 2 000 $Nm^3$ gas/$m^3$ $hr^{-1}$. The space velocity (based upon the bed volume of hydrolysing catalyst) is preferably 20 000 $Nm^3$ gas/$m^3$ $hr^{-1}$ or less, more preferably 15 000 $Nm^3$ gas/$m^3$ $hr^{-1}$ or less, even more preferably 10 000 $Nm^3$ gas/$m^3$ $hr^{-1}$ or less. The space volume for the hydrogenation catalyst is comparable and can be derived from the space velocity for the hydrolysing catalyst and the ratio hydrolysing catalyst to hydrogenation catalyst.

The hydrolysing catalyst can be combined with the hydrogenation catalyst in a variety of configurations, depending among others on the feed gas composition, in particular the CO content. The hydrogenation catalyst can be supported directly on the hydrolysing catalyst, be physically mixed with it, or can be applied as a separate bed or layer preceding the hydrolysing catalyst. The latter option is preferred with respect to reducing the $SO_2$ levels and keeping the COS levels as low as possible. An advantage of using a mixture of hydrolysing catalyst and hydrogenation catalyst or of using a combination of both catalysts on a single support is the ease of applying it to the reactor wherein the process is carried out, since they do not have to be maintained in different layers (if a single reactor is used).

With respect to a combination of a hydrolysing catalyst and a hydrogenation catalyst on a single support material, a metal sulphide on a $TiO_2$ is considered to be very suitable. In such a combination the metal sulphide acts as a hydrogenation catalyst and the $TiO_2$ serves both as a hydrolysing catalyst and as a support material.

In physical mixtures and in separate bed or layer configurations, the hydrolysing catalyst to hydrogenation catalyst ratio (volume to volume) may suitably be chosen between 0.01 and 10, preferably between 0.1 and 5 and more preferably between 0.25 and 2. Very good results have been realised with a hydrolysing catalyst to hydrogenation catalyst ratio of more than 1.

Combinations of a mixture of a hydrogenation and a hydrolysing catalyst , followed by a separate bed or layer of hydrolysing catalyst is also possible. Such a configuration has been found to reduce the COS production by hydrolysis, simultaneously with the hydrogenation. The hydrolysing catalyst in the subsequent separate bed or layer then removes at least part of the remaining COS.

The physical mixtures can be prepared by any known means, e.g. by mixing extrusions, spheres or other available shapes of the catalysts. It is also possible to mix powders of the catalysts and shape the mixture in the desired form, *e.g.* extrusions, rings, spheres, trilobes or quadrulobes. Yet another possibility is to apply the catalysts to metal or ceramic substrates such as monoliths. As an example, one could apply the hydrolysing catalyst to a monolith by means known in the art and subsequently impregnate the hydrolysing catalyst coating completely or partially with a hydrogenation catalyst or with a component having a hydrogenation function. Another possibility is to prepare a slurry of a mixture of a hydrogenation catalyst and a hydrolysing catalyst, to coat the slurry on a monolith and to dry the thus obtained coating.

The Claus catalyst may be any catalyst with Claus activity *i.e.* being capable of catalysing the formation of S out of $H_2S$ and $SO_2$. Suitable examples of Claus catalysts include those described in the above identified prior art. Very good results have *inter alia* been achieved with a Claus catalyst with a relatively high macroporosity, such as Axens CR-3S™. The macroporosity, is defined herein as the total volume of pores, per gram catalyst, with a diameter of more than 100 nm ($V_{100}$), as measured by mercury porosimetry (as described in E. Robens *et al*.: "Standardization of sorption measurements and reference materials for dispersed and porous solids", Ch. 3 of: A. Dabrowski (ed.):

"Adsorption and its Application in Industry and Environmental Protection". Vol. 1: "Application in Industry"; Studies in surface science and catalysis, Vol. 120A; Elsevier, Amsterdam 1999). $V_{100}$ is preferably more than 0.12 ml/g, more preferably in the range of 0.17-0.25 ml/g. Particularly suitable are Claus catalysts with a high ultra macroporosity, defined as the total volume of pores, per gram catalyst, with a diameter of more than 1000 nm ($V_{1000}$). The ratio $V_{1000}/V_{100}$ is preferably in the range 0.7 - 1.

The Claus catalyst can be operated at any convenient temperature for the chosen catalyst. For practical reasons the temperature may be chosen at about the same temperature as the temperature in the stage or stages wherein the gas stream is contacted with the hydrogenation catalyst and the hydrolysing catalyst. It is not necessary for the Claus catalyst to convert $SO_2$ to very low levels or to even remove substantially all $SO_2$. Good results have been obtained with a process wherein the gas stream, fed to the hydrogenation catalyst contains up to 1 500 ppmv $SO_2$, preferably about 500-1 000 ppmv $SO_2$.

The average catalyst particle diameter and other parameters can be chosen in a wide range. The specific surface area - as determined by $N_2$-absorption multi point BET surface area measurement, as described by E. Robens *et al.* (see above for full reference) - is preferably higher than 100 $m^2/g$, more preferably more than 200 $m^2/g$, in particular between 200 and 400 $m^2/g$.

The average particle diameter may for example be chosen between 1 and 8 mm.

Very good results have been achieved in a process wherein the Claus catalyst is used in combination with an oxygen scavenger, such as a scavenging catalyst. Examples of effective scavenging catalysts are Fe and Fe/Ni on a support material, preferably on titania, alumina and/or silica. The scavenger is preferably provided as a top layer on the Claus catalyst. The skilled person will be able to select a suitable hydrogenation catalyst based upon common knowledge. In principle any hydrogenation catalyst suitable for use in hydrodesulphurisation and/or hydrotreating processes in refinery technology may be used. Physical properties, *e.g* porosity may be chosen in the same range as defined for the Claus catalyst. The surface area of the hydrogenation catalyst, in particular when it is a catalyst on a titania support, is preferably chosen in the range of 75-400 $m^2/g$, more preferably in the range of 150-400 $m^2/g$. Examples of hydrogenation catalyst catalysts) include commercially available catalysts such as AKZO KF-752™ and Criterion C-534™.

Good results have *inter alia* been achieved with a sulphided metal catalyst, in particular with a catalyst comprising a metal sulphide selected from the group consisting of Group VI and Group VIII transition metals. Preferred are sulphides of cobalt, molybdenum, iron, nickel, chromium, tungsten and combinations thereof. Of these catalysts, metal sulphides on a support material are preferred, in particular such catalysts with silica and/or alumina as a support material. Particularly preferred hydrogenation catalysts are Fe/Ti catalysts , Fe/Ni catalysts, Co/Mo catalysts, Ni/Mo catalysts, Fe/Cr catalysts and combinations thereof. Very good results have been achieved with a Co/Mo catalyst.

The skilled person will be able to select a suitable hydrolysing catalyst, such as a $TiO_2$ catalyst, activated alumina — preferably comprising a promotor - or a chromium based catalyst, based upon common knowledge. Physical properties may be chosen in the same range as defined for the Claus catalyst. Preferably the BET surface area is less than 400 $m^2/g$ , more preferably in the range of 75-400 $m^2/g$, in particular about 100-400 $m^2/g$. The volume average pore diameter, as measured by mercury porosimetry (according to E. Robins) is preferably at least 30 nm, more preferably at least 40 nm, even more preferably at least 50 nm.

Particular good results have been achieved with a material comprising at least 50 wt. % $TiO_2$, preferably 70-90 wt. % $TiO_2$ and a calcium promotor. A commercially available example of a $TiO_2$ containing catalyst is Axens CRS-31™. Another example of a suitable catalyst is a chromium oxide on alumina, such as G-41P™ (Süd Chemie).

Preferably the gas stream is contacted with an oxygen-scavenger - *e.g.* an oxygen scavenging catalyst - prior to contacting the gas stream with the Claus catalyst. Thus the oxygen level is kept low, to prevent deactivation of the Claus catalyst by surface sulphate formation. Any oxygen scavenger used in the art can be used. Good results have *inter alia* been achieved with a Claus catalyst impregnated with an iron salt (*e.g.* about 5-20 wt % Fe) on $\gamma$-$Al_2O_3$ scavenging material. Examples of suitable commercially available oxygen scavengers are Axens AM™ and AMS™. It should be noted that these catalysts are also active Claus catalysts and may be used as such in a process according to the invention.

The use of an oxygen scavenger is particular preferred in a process wherein the gas stream is heated with an in-line burner before entering the Claus catalyst bed.

The physical properties of the oxygen scavenger may be chosen in a wide range. These properties may suitably be chosen in about the same range as specified for the Claus catalyst, in particular with respect to pore volumes and pore diameters. Good results have for example been achieved with an oxygen scavenger having a BET surface area of about 200-350 $m^2/g$.

The amounts of the respective materials used in a process according to the invention can be chosen within wide ranges, depending upon economical and technical considerations.

Suitable amounts may for example suitably be chosen from the ranges indicated below, wherein "vol %" for each catalyst refers to the volume percentage as a percentage of the total volume of the bed(s) of said catalysts (Claus catalyst, hydrogenation catalyst, hydrolysing catalyst and optionally oxygen scavenger).

In practice, in a process according to the invention the amount of oxygen scavenger is preferably 0-30 vol %, more preferably 10-25 vol %.

The amount of Claus catalyst is usually 30-90 vol %, preferably 45-75 vol %.

The amount of hydrogenation catalyst is generally at least 5 vol %, preferably 8-20 vol %, more preferably 10-15 vol %.

The amount of hydrolysing catalyst, *e.g.* $TiO_2$ catalyst, is typically at least 5 vol %, preferably 8-25 vol %, more preferably 10-20 vol %. Very good results have been achieved with a hydrolysing catalyst amount of 15 vol % or less.

In case one catalyst serves more functions (*e.g.* it combines the function of hydrolysing catalyst and hydrogenation catalyst), the skilled person will know how to calculate appropriate amounts of each catalyst, based upon his common general knowledge and the specifications of the material, based upon the above specified amounts.

A process according to the present invention can very suitably be carried out in a single reactor, although it is also possible to perform the treatment with scavenger, Claus catalyst, hydrogenation catalyst, and hydrolysing catalyst in different reactors. From an economic view point the process is preferably carried out in a single reactor wherein the reactor contains the materials with which the gas stream is contacted in separate beds.

From a technical viewpoint, it has been found advantageous that the gas stream is treated in a sulphur condenser (to remove part of the elemental sulphur from the gas stream), after having been contacted with the Claus catalyst and before being contacted with the hydrogenation catalyst. This is advantageous because this increases the sulphur recovery efficiency further.

After having been contacted with the hydrolysing catalyst the gas stream may be further treated in a process *e.g.* to remove $H_2S$ from the gas stream. Such removal can suitably achieved by a further chemical process step or by a physical process step such as adsorption or absorption. Such processes are well-known in the art. In a preferred process according to the invention, the gas stream is further subjected to a chemical process step wherein $H_2S$ is converted into elemental sulphur, which elemental sulphur is subsequently removed from the product gas. Especially the application of a dry bed oxidation reactor, such as a SUPERCLAUS® reactor, wherein the $H_2S$ is oxidised to sulphur vapour with a high yield, results in an attractive process with a very high overall sulphur recovery efficiency.

The invention will now be illustrated by the following examples.

Example 1

A tubular quartz reactor (with a diameter of 25 mm with a total volume of 27.6 ml was filled is several ways as indicated in Table 1:

Table 1:

| Composition of reaction systems (in order from inlet to outlet): | | | | |
|---|---|---|---|---|
| layer # | A comparison | B comparison | C comparison | D (CoMo/ TiO$_2$ mix) | E (CoMo/ TiO$_2$ layers) |
| 1st | 80 % CR3S | 20 vol % AMS | 20 vol % AMS | 20 vol % AMS | 20 vol % AMS |
| 2nd | - | 60 vol % CR3S | 60 vol % CR3S | 60 vol % CR3S | 60 vol % CR3S |
| 3rd | 20 vol % glass pearls | 20 vol % glass pearls | 10 vol % CoMo-KF752 | 20 vol % mix of CoMo-KF752 and CRS31(50:50 vol) | 10 vol % CoMo-KF752 |
| 4th | - | - | 10 vol % glass pearls | - | 10 vol % CRS31 |

legend:

AMS™ : oxygen scavenger (Fe/Ni on γ-Al$_2$O$_3$) supplied by Axens.

CR3S™ : Claus catalyst (γ-Al$_2$O$_3$) supplied by Axens.

CoMo-KF752™ : hydrogenation catalyst (sulphided cobalt/molybdenum) supplied by AKZO-Nobel.

CRS31™: TiO$_2$ material ( approximately 85 wt % TiO$_2$ and approximately 15 wt % CaSO$_4$) supplied by Axens

The reactors were used to contact a gas stream - comprising 1.5 vol % $H_2S$, 0.6 % $SO_2$, 3.3 % $H_2$, 1 % $CO_2$, 30 % $H_2O$, 1.3 % CO and the balance being He - at a temperature of 230 °C and several space velocities.

The results are shown in the following tables.

Table 2:

| Space velocity of 435 Nm$^3$ /m$^3$ catalyst bed (total volume of catalysts+pearls) hr$^{-1}$, temperature of 230 °C | | | | | | |
|---|---|---|---|---|---|---|
| Component | reactor in | reactor out | | | | |
| | | A | B | C | D | E |
| | | | | | | |
| $H_2S$ (ppmv) | 15 000 | 5544 | 5741 | 8256 | 11 729 | 11 255 |
| $SO_2$ (ppmv) | 6 000 | 1053 | 548 | 273 | 104 | 55 |
| COS (ppmv) | 0 | 7 | 17 | 1308 | 282 | 44 |

Table 2: (continued)

| Space velocity of 435 Nm$^3$/m$^3$ catalyst bed (total volume of catalysts+pearls) hr$^{-1}$, temperature of 230 °C | | | | | | |
|---|---|---|---|---|---|---|
| Component | reactor in | reactor out | | | | |
| | | A | B | C | D | E |
| S-vapour (ppmv S$_1$) | 0 | 14 459 | 14 757 | 11 226 | 8 918 | 9 709 |
| H$_2$ (vol%) | 3.3 | not determined | | | | |
| CO (vol%) | 1.33 | | | | | |
| H$_2$O (vol%) | 30 | | | | | |

Table 3:

| Space velocity of 1000 Nm$^3$/m$^3$ catalyst bed (total volume of catalysts+pearls) hr$^{-1}$, temperature of 230 °C | | | | | | |
|---|---|---|---|---|---|---|
| Component | reactor in | reactor out | | | | |
| | | A | B | C | D | E |
| | | | | | | |
| H$_2$S (ppmv) | 15 000 | 5397 | 5 197 | 6298 | 7198 | 7016 |
| SO$_2$ (ppmv) | 6 000 | 1036 | 786 | 607 | 481 | 312 |
| COS (ppmv) | 0 | 15 | 20 | 594 | 222 | 135 |
| S-vapour (ppmv S$_1$) | 0 | 14 615 | 15 207 | 14 164 | 13 162 | 13 630 |
| H$_2$ (vol%) | 3.3 | not determined | | | | |
| CO (vol%) | 1.33 | | | | | |
| H$_2$O (vol%) | 30 | | | | | |

Example 2

A tubular quartz reactor, with a diameter of 25 mm and a total volume of 27.6 ml, was filled in the ways as indicated in table 4.

Table 4:

| Composition of reaction systems (in order from feed gas inlet side to gas outlet). | | | |
|---|---|---|---|
| Layer # | A Claus catalyst (reference) | B Claus + hydrogenation catalyst (reference) | C Claus + combined hydrogenation/hydrolysis(=TiO$_2$) catalyst |
| 1st | 80 vol. % CR3S | 80 vol. % CR3S | 80 vol. vol% CR3S |
| 2nd | 20 vol. % glass pearls | 20 vol. % FeSi | 20 vol. % FeTi |

Legend:
CR3S™: Claus catalyst (Al$_2$O$_3$) supplied by Axens.

FeSi: proprietary catalyst, 5 wt% Fe$_2$O$_3$, based on the weight of the catalyst, on a silica support.

FeTi: proprietary catalyst, 5 wt% Fe$_2$O$_3$, based on the weight of the catalyst, on an unpromoted titania support; average catalyst pore diameter of about 10nm.

It is noted that the Fe-titania catalyst had a average pore diameter of only 10 nm, which is far below optimal.
The catalyst beds were contacted with a gas stream, comprising 1.5 vol.% H$_2$S, 0.6 vol. % SO$_2$, 3.3 vol. % H$_2$, 30 % H$_2$O, 1.3 vol. % CO, He balance, at 230 °C and a space velocity of 435 Nm3 feed gas/h/m3 catalyst bed (incl. pearls in bed A) as defined in table 4. The results are shown in table 5.

Table 5:

| Comparative tests with a bifunctional Fe-titania catalyst. | | | | |
|---|---|---|---|---|
| **Feed gas component** | **Reactor in** | **Reactor out** | | |
| | | A | B | C |
| $H_2S$ (ppmv) | 15 000 | 5 544 | 6 273 | 9 221 |
| $SO_2$ (ppmv) | 6 000 | 1 053 | 361 | 218 |
| COS (ppmv) | 0 | 7 | 3 85 | 209 |
| S-vapour (ppmv $S_1$) | 0 | 14 459 | 14 042 | 11 415 |
| $H_2$ (vol. %) | 3.3 | Not determined | | |
| CO (vol. %) | 1.33 | | | |
| $H_2O$ (vol %) | 30 | | | |

**Claims**

1. Process for reducing the amount of $SO_2$ in a $SO_2$ and CO containing gas stream, wherein

   - the gas stream is contacted with a Claus catalyst;
   - simultaneously with or subsequently to the contacting with the Claus catalyst, the gas stream is contacted with a hydrogenation catalyst, at a temperature below 270 °C;
   - simultaneously with or subsequently to the contacting with the hydrogenation catalyst, the gas stream is contacted with a hydrolysing catalyst, at a temperature below 270 °C; and
   - wherein the $H_2S$ formation by the hydrogenation catalyst and the hydrolysing catalyst is non-excessive compared to the $SO_2$ reduction by the hydrogenation catalyst and the hydrolysing catalyst.

2. Process according to claim 1, wherein the gas stream is contacted with the Claus catalyst and thereafter with the hydrogenation catalyst.

3. Process according to claim 1 or 2, wherein the gas stream is contacted with the hydrogenation catalyst and thereafter with the hydrolysing catalyst.

4. Process according to claim 1 or 2, wherein the hydrolysing catalyst and the hydrogenation catalyst are present on a single support, wherein optionally one of these catalysts also serves as a support material.

5. Process according to any of the preceding claims, wherein the hydrolysing catalyst and/or the hydrogenating catalyst are CO shifting catalysts.

6. Process according to any of the claims 1-5, wherein the hydrolysing catalyst is a $TiO_2$ catalyst.

7. Process according to any of the preceding claims, wherein the hydrogenation catalyst comprises a metal sulphide selected from the group consisting of sulphides of cobalt, molybdenum, iron, nickel, chromium, tungsten and combinations thereof.

8. Process according to any of the preceding claims, wherein the hydrogenation catalyst is a metal sulphide on a silica support material, a metal sulphide on an alumina support material or a combination thereof.

9. Process according to any of the preceding claims, wherein the hydrogenation catalyst is selected from the group consisting of Fe-Ti catalysts, Fe-Ni catalysts, Co-Mo catalysts, Ni-Mo catalysts, Fe-Cr catalysts and combinations thereof.

10. Process according to any of the preceding claims, wherein the gas stream is contacted with an oxygen-scavenger, preferably an oxygen scavenger catalyst, prior to contacting the gas stream with the Claus catalyst.

11. Process according to claim 10, wherein the oxygen-scavenging catalyst is selected from the group consisting of catalysts comprising iron and/or nickel on a support, wherein the support is preferably a $TiO_2$ support, a $Al_2O_3$ support, a $SiO_2$ support or a combination thereof.

12. Process according to any of the preceding claims, wherein the contacting with the Claus catalyst, the hydrogenation catalyst, the hydrolysing catalyst, and optionally the oxygen scavenger is carried out in a single reactor.

13. Process according to any of the preceding claims, wherein the amount of oxygen scavenger is 0-30 vol %, preferably 10-25 vol %; the amount of Claus catalyst is 30-90 vol %, preferably 45-75 vol %; the amount of hydrogenation catalyst is 5-20 vol %, preferably 10-15 vol % and the amount of hydrolysing catalyst is 5-20 vol %, preferably 10-15 vol %, with the proviso that the total sum of oxygen scavenger plus said catalysts is 100 %.

14. Process according to any of the preceding claims, wherein the $SO_2$ conversion is at least 90 %, preferably at least 95 %, more preferably at least 98 %.

15. Process according to any of the preceding claims wherein, after being contacted with the hydrolysing catalyst, the gas stream contains 0.5-1.5 vol % $H_2S$, 0-600 ppmv $SO_2$, 0-600 ppmv COS and at least 0.1 vol. % elemental sulphur.

16. Process according to any of the preceding claims, wherein the space velocity of the gas stream is in the range of 500 to 20 000 $Nm^3/m^3$ hydrolysing catalyst $hr^{-1}$, preferably in the range of 1 000-15 000 $Nm^3/m^3$ hydrolysing catalyst $hr^{-1}$

17. Process according to claim 16, wherein the space velocity is in the range of 1 650 to 10 000 $Nm^3/m^3$ hydrolysing catalyst $hr^{-1}$.

18. Process according to any of the preceding claims, wherein at least the contacting with the hydrogenation catalyst and the hydrolysing catalyst is carried out at a temperature in the range of 190-260 °C, preferably in the range of 210-240 °C more preferably in the range of 220-230 °C.

19. Process according to any of the preceding claims, wherein the gas stream is a product gas from a preceding Claus reactor.

20. Process according to any of the preceding claims, wherein the provided $SO_2$ containing gas stream comprises at least 0.5 vol % CO.

21. Process according to any of the preceding claims, wherein after contacting with the hydrolysing catalyst the gas stream is subjected to a further process step wherein at least a part of the $H_2S$ is removed from the stream.

22. Process according to claim 21 wherein in said further process step the $H_2S$ is oxidised, adsorbed or absorbed.

23. Process according to claim 22, wherein the $H_2S$ is oxidised in a dry bed reactor, such as a SUPERCLAUS reactor.

24. Process according to any of the claims 1-11 or 13-23, wherein the gas stream is treated in a sulphur condenser, after having been contacted with the Claus catalyst and before being contacted with the hydrogenation catalyst and hydrolysing catalyst.

# EP 1 442 781 A1

**European Patent Office**

## EUROPEAN SEARCH REPORT

Application Number

EP 03 07 5318

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 332 337 A (SHELL INT RESEARCH) 3 October 1973 (1973-10-03) <br><br> * claims 1-5,9,12,14; example 2 * <br> --- | 1-3, 7-10, 14-19, 21,22 | B01D53/86 |
| D,X | WO 98 07502 A (SHELL INT RESEARCH) 26 February 1998 (1998-02-26) <br><br> * page 5, line 16 - page 7, line 33 * <br> --- | 1-3,9, 11,12, 16-19,22 | |
| X | US 2002/094308 A1 (PORTZ BRUCE DEAN) 18 July 2002 (2002-07-18) <br> * claim 1 * <br> --- | 1,21,23, 24 | |
| A | US 5 676 921 A (HEISEL MICHAEL ET AL) 14 October 1997 (1997-10-14) <br> * claim 1 * <br> --- | 1-24 | |
| A | NL 8 800 525 A (ELEKTROSCHMELZWERK DELFZIJL B) 2 October 1989 (1989-10-02) <br> * claims * <br> ----- | 1-24 | TECHNICAL FIELDS SEARCHED (Int.Cl.7) <br><br> B01D |

The present search report has been drawn up for all claims

| Place of search | Date of completion of the search | Examiner |
|---|---|---|
| THE HAGUE | 14 July 2003 | Faria, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**ANNEX TO THE EUROPEAN SEARCH REPORT
ON EUROPEAN PATENT APPLICATION NO.**

EP 03 07 5318

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2003

| Patent document cited in search report | | Publication date | Patent family member(s) | | Publication date |
|---|---|---|---|---|---|
| GB 1332337 | A | 03-10-1973 | NL | 7013902 A | 23-03-1972 |
| | | | AT | 304582 B | 10-01-1973 |
| | | | BE | 761027 A2 | 30-06-1971 |
| | | | CA | 947473 A1 | 21-05-1974 |
| | | | CS | 164881 B2 | 28-11-1975 |
| | | | DE | 2101901 A1 | 06-04-1972 |
| | | | ES | 387550 A1 | 16-05-1973 |
| | | | FR | 2105755 A5 | 28-04-1972 |
| | | | IE | 34857 B1 | 03-09-1975 |
| | | | PH | 9323 A | 23-09-1975 |
| | | | SU | 389656 A3 | 05-07-1973 |
| | | | ZA | 7008631 A | 27-10-1971 |
| WO 9807502 | A | 26-02-1998 | AT | 208227 T | 15-11-2001 |
| | | | AU | 710859 B2 | 30-09-1999 |
| | | | AU | 4457197 A | 06-03-1998 |
| | | | BR | 9711322 A | 17-08-1999 |
| | | | CN | 1230134 A | 29-09-1999 |
| | | | CZ | 9900553 A3 | 12-01-2000 |
| | | | DE | 69708119 D1 | 13-12-2001 |
| | | | DE | 69708119 T2 | 06-06-2002 |
| | | | DK | 920351 T3 | 25-02-2002 |
| | | | WO | 9807502 A1 | 26-02-1998 |
| | | | EP | 0920351 A1 | 09-06-1999 |
| | | | ES | 2169428 T3 | 01-07-2002 |
| | | | JP | 2000516530 T | 12-12-2000 |
| | | | NO | 990795 A | 19-02-1999 |
| | | | NZ | 334727 A | 29-09-2000 |
| | | | PL | 331847 A1 | 16-08-1999 |
| | | | PT | 920351 T | 28-03-2002 |
| | | | RU | 2177361 C2 | 27-12-2001 |
| | | | TR | 9900356 T2 | 21-05-1999 |
| | | | TW | 438620 B | 07-06-2001 |
| | | | ZA | 9707495 A | 03-03-1998 |
| US 2002094308 | A1 | 18-07-2002 | NONE | | |
| US 5676921 | A | 14-10-1997 | DE | 4409203 A1 | 21-09-1995 |
| | | | AT | 167653 T | 15-07-1998 |
| | | | CA | 2144893 A1 | 18-09-1995 |
| | | | DE | 59502626 D1 | 30-07-1998 |
| | | | EP | 0672618 A1 | 20-09-1995 |
| NL 8800525 | A | 02-10-1989 | NONE | | |

EPO FORM P0459

For more details about this annex : see Official Journal of the European Patent Office, No. 12/82